# EUROPÄISCHE PATENTSCHRIFT

(11) **EP 0 677 264 B1**
(45) Veröffentlichungstag und Bekanntmachung des Hinweises auf die Patenterteilung: **09.07.1997**
(21) Anmeldenummer: 95104257.1
(22) Anmeldetag: 23.03.1995
(51) Int. Cl.: A47J 27/022, A47J 36/02

(54) **Topfförmiges Gar- und/oder Kochgerät**
Pot-shaped baking and/or cooking vessel
Récipient de rôtissage et/ou de cuisson en forme de marmite

(30) Priorität: 15.04.1994 DE 4412944
(43) Veröffentlichungstag der Anmeldung: 18.10.1995
(73) Patentinhaber: VESTA AG & Co. oHG, D-55743 Idar-Oberstein (DE)
(72) Erfinder: Fissler, Harald, Dipl.-Ing., D-55743 Idar-Oberstein (DE)
(74) Vertreter: Honke, Manfred, Dr.-Ing.

(56) Entgegenhaltungen:
- EP-A- 0 451 033
- EP-A- 0 534 202
- WO-A-94/01030
- DE-A- 3 713 660
- DE-C- 4 125 115
- DE-U- 8 630 655
- DE-U- 9 315 661
- DE-U- 9 320 248

## Beschreibung

Die Erfindung betrifft ein topfförmiges Gar- und/oder Kochgerät gemäß dem Oberbegriff der Ansprüche 1 und 2 (vgl. Dokument DE-U-9 320 248), welches für eine bodenseitige Zuführung von Wärmeenergie durch Wärmeleitung oder elektromagnetische Induktion eingerichtet ist, - mit einem im Grundriß runden Aufnahmebehälter für das Gar- und/oder Kochgut mit Behältermantel und Behälterboden aus austenitischem Stahlblech, einer bodenseitig angeschlossenen Platine aus einem gut wärmeleitenden metallischen Werkstoff (z. B. aus einer Aluminium- oder Kupferlegierung) und einer metallischen Platinenabdeckung. - Gar- und/oder Kochgeräte, welche wie vorstehend beschrieben eingerichtet sind, werden auch als Allherdgargeräte bzw. Allherdkochgeräte bezeichnet. Sie sind insbesondere für Haushalte bestimmt.

Gar- und/oder Kochgeräte, welche für eine bodenseitige Zuführung der Wärmeenergie durch Wärmeleitung eingerichtet und in der Praxis bewährt sind, sind mit einer Platine aus einer Aluminiumlegierung oder einer Kupferlegierung ausgerüstet und besitzen eine Platinenabdeckung aus einem Stahlblech aus einer geeigneten austenitischen Stahllegierung. Diese Werkstoffwahl ist getroffen worden, weil austenitische Stähle nicht rosten. Austenitische Stähle sind jedoch nicht ferromagnetisch. Daraus resultieren Nachteile, wenn die Wärmeenergie über elektromagnetische Induktion zugeführt wird. Die Platinenabdeckung erfährt lediglich eine ohmsche Erwärmung. Demgegenüber nimmt ein ferromagnetischer Werkstoff durch elektromagnetische Induktion mit erheblich höherer Leistung Wärmeenergie auf, weil die sogenannten Hystereseverluste sich in Wärmeenergie umsetzen. Die übertragene, in Wärmeenergie umsetzbare elektromagnetische Leistung ist bei den vorbeschriebenen Ausführungsformen von topfförmigen Gar- und/oder Kochgeräten verbesserungsfähig.

Um bei den beschriebenen Gar- und/oder Kochgeräten des beschriebenen Aufbaus die Zufuhr der Wärmeenergie über elektromagnetische Induktion zu verbessern, ist es bekannt, mit ferromagnetischen Platinen zu arbeiten (DE 86 30 655 U). Die ferromagnetische Platine ist mit einer austenitischen Platinenabdeckung versehen oder liegt mit ihrem Platinenboden frei. Liegt sie frei, so können unter Umständen Korrosionserscheinungen auftreten, wenngleich der ferromagnetische Werkstoff regelmäßig möglichst korrosionsresistent ausgewählt wird. Ist die Platine mit einer austenitischen Platinenabdeckung versehen, so stört diese die elektromagtische Induktion in bezug auf die übertragene Leistung.

Aus der Praxis ist es bekannt, bei einem Gar- und/oder Kochgerät des eingangs beschriebenen Aufbaus die aus ferromagnetischem Werkstoff bestehende Platinenabdeckung im Abdeckboden mit Perforierungen zu versehen, in die der Platinenwerkstoff eintritt.

Der Erfindung liegt das technische Problem zugrunde, ein topfförmiges Gar- und/oder Kochgerät des eingangs beschriebenen grundsätzlichen Aufbaus zu schaffen, welches sich durch hohe Leitungsaufnahme in bezug auf die Einleitung der Wärmeenergie durch elektromagnetische Induktion auszeichnet, aber auch für die Zuführung von Wärmeenergie durch Wärmeleitung, z. B. durch Aufstellen auf eine Kochplatte, wohlgeeignet ist.

Zur Lösung dieses technischen Problems ist Gegenstand der Erfindung ein topfförmiges Gar- und/oder Kochgerät, welches für eine bodenseitige Zuführung von Wärmeenergie durch Wärmeleitung oder elektromagnetische Induktion eingerichtet ist, - mit einem im Grundriß runden Aufnahmebehälter für das Gar- oder Kochgerät mit Behältermantel und Behälterboden aus austenitischem Stahlblech, einer bodenseitig angeschlossenen Platine aus einem gut wärmeleitenden metallischen Werkstoff (z. B. aus einer Aluminium- oder Kupferlegierung) und einer metallischen Platinenabdeckung, bei welchem Gar- und/oder Kochgerät die folgenden Merkmale verwirklicht sind:
a) die Platinenabdeckung besitzt einen kreisscheibenförmigen Abdeckboden mit einer Mehrzahl von über den Umfang verteilten kreissymmetrischen Abdeckbodenausnehmungen,
b) in die Abdeckbodenausnehmungen sind Abdeckbodenfüllstücke eingepaßt, wobei der Abdeckboden aus austenitischem Stahlblech und die Abdeckbodenfüllstücke aus ferromagnetischem Stahlblech bestehen und
wobei der Abdeckboden und die Abdeckbodenfüllstücke metallisch mit der Platine und diese mit dem Behälterboden verbunden sind, und wobei der Abdeckboden eine Bodenkaltgeometrie aufweist, die zu einer ebenen Aufstellfläche für das Gar- und/oder Kochgerät hin schwach konkav ist sowie die Blechdicke des Aufnahmebehälterbodens, die Blechdicke des Abdeckbodens, die Dicke der Platine, die Gestaltung der Abdeckbodenausnehmungen und der Abdeckbodenfüllstücke bombagestabil eingerichtet sind.

Eine andere Lösung dieses Problems ist gegeben durch ein topfförmiges Gar- und/oder Kochgerät, welches für eine bodenseitige Zuführung von Warmeenergie durch Wärmeleitung oder elektromagnetische Induktion eingerichtet ist, - mit einem im Grundriß runden Aufnahmebehälter für das Gar- oder Kochgerät mit Behältermantel und Behälterboden aus austenitischem Stahlblech, einer bodenseitig angeschlossenen Platine aus einem gut wärmeleitenden metallischen Werkstoff (z. B. aus einer Aluminium- oder Kupferlegierung) und einer metallischen Platinenabdeckung, bei welchem Gar- und/oder Kochgerät die folgenden Merkmale verwirklicht sind:
a) die Platinenabdeckung besitzt einen kreisscheibenförmigen Abdeckboden mit einer Mehrzahl von über den Umfang verteilten kreissymmetrischen Abdeckbodenausnehmungen,
b) in die Abdeckbodenausnehmungen sind Abdeckbodenfüllstücke eingepaßt, wobei der Abdeckboden aus ferromagnetischem Stahlblech und die Abdeckbodenfüllstücke aus austenitischem Stahlblech bestehen und
wobei der Abdeckboden und die Abdeckbodenfüllstücke metallisch mit der Platine und diese mit dem Behälterboden verbunden sind, und wobei der Abdeckboden eine Bodenkaltgeometrie aufweist, die zu einer ebenen Aufstellfläche für das Gar- und/oder Kochgerät hin schwach konkav ist sowie die Blechdicke des Aufnahmebehälterbodens, die Blechdicke des Abdeckbodens, die Dicke der Platine, die Gestaltung der Abdeckbodenausnehmungen und der Abdeckbodenfüllstücke bombagestabil eingerichtet sind.

Es versteht sich, daß man im Rahmen der beiden vorstehend behandelten Lösungen des technischen Problems der Erfindung zweckmäßigerweise mit möglichst korrosionsfesten ferromagnetischen Stahllegierungen arbeitet. Vorteilhafte Weiterbildungen der Erfindung sind durch die Unteransprüche 3 - 12 gekennzeichnet.

Die Erfindung geht von der überraschenden Tatsache aus, daß die ferromagnetischen Bereiche im Abdeckboden der Platinenabdeckung eine Erwärmung mit sehr hoher Leitungsaufnahme erfahren. Obgleich die ferromagnetischen Bereiche gleichsam Inseln bzw. Netzwerke darstellen, lassen sich die geometrischen Verhältnisse in bezug auf den Abdeckboden einerseits und die Abdeckfüllstücke andererseits so einrichten, daß eine sehr homogene Erwärmung der Platine und damit des Aufnahmebehälterbodens sowie des Gar- oder Kochgutes erfolgt. Überraschenderweise treten störende Korrosionserscheinungen in den Kontaktstellen zwischen den austenitischen und ferromagnetischen Werkstoffen, insbesondere also an den Spalten oder Nähten zwischen den Abdeckbodenausnehmungen und den Abdeckbodenfüllstücken nicht auf. Man arbeitet zweckmäßig mit sehr engen Passungen. Durch die Abdeckbodenausnehmungen und die eingepaßten Abdeckbodenfüllstücke wird das Wärmedehnungsverhalten der Platinenabdeckung bzw. des Abdeckbodens modifiziert. Ein besonderer Vorteil der Erfindung besteht darin, daß die Modifizierung ohne Beeinträchtigung der Leistungsaufnahme bei Wärmeeinleitung durch elektromagnetische Induktion so eingerichtet werden kann, daß bei der Wärmeleitung eine störende Verformung der Platinenabdeckung, z. B. in Form einer leichten Bombage, nicht eintritt. Bombage meint eine leicht konvexe Vorwölbung. Die entsprechende Einrichtung läßt sich bei Gar- und/oder Kochgeräten unterschiedlichen Typs rechnerisch und experimentell ermitteln.

Ist das Induktionsfeld so eingerichtet, daß ein um eine zentrale Achse rotationssysmmetrisches elektromagnetisches Feld entsteht, welches über die Induktionsplatte abgestrahlt wird, und wird in der Regel das Gar- und/oder Kochgerät so auf eine Induktionsplatte aufgesetzt, daß dessen vertikale geometrische Achse mit der Symmetrieachse des elektromagnetischen Feldes mehr oder weniger genau zusammenfällt, so empfehlen sich besondere Ausführungsformen des erfindungsgemäßen Gar- und Kochgerätes. Ein in der beschriebenen Weise symmetrisches elektromagnetisches Feld läßt sich unschwer über eine Induktionsspule erreichen, die ihrerseits als Schraubenwendel oder ebene Spirale ausgerüstet ist. Sind diese Symmetrieverhältnisse gegeben, so geht die Grundlehre der Erfindung dahin, die Abdeckbodenausnehmungen und die Abdeckbodenfüllstücke entsprechend symmetrisch auszubilden. Das kann auf verschiedene Weise geschehen. So können die Abdeckbodenausnehmungen als Kreisbogenabschnitte einer Breite von 10 bis 20 mm ausgeführt sein und zwischen radial verlaufenden Abdeckbodenstegen angeordnet sein, wobei die ebenfalls kreisbogenabschnittförmigen Abdeckbodenfüllstücke in die Kreisbogenabschnitte eingepaßt sind. Dabei empfiehlt es sich, die Anordnung so zu treffen, daß vier rechtwinklig zueinander verlaufende Abdeckbodenstege vorgesehen sind, die von einem kreisförmigen Abdeckbodenzentrum ausgehen. Es besteht aber auch die Möglichkeit, die Abdeckbodenausnehmungen als Kreissegmente auszuführen, zwischen denen radial verlaufende Abdeckbodenstege angeordnet sind, wobei die ebenfalls kreissegmentförmigen Abdeckbodenfüllstücke in die Kreissegmente eingepaßt sind. Hier empfiehlt es sich, die Anordnung so zu treffen, daß die Kreissegmente zum Rand der Platinenabdeckung hin halbkreisförmig begrenzt sind. Zweckmäßigerweise sind dabei die Kreissegmente gleich groß.

Im Rahmen der Erfindung kann die Platinenabdeckung als eine Blechscheibe ausgeführt sein, sie kann aber auch als eine Kapselabdeckung ausgeführt sein (vgl. DE 41 25 115.6 C2).

Besonders bewährt haben sich die beschriebenen Ausführungsformen, wenn in bezug auf die verschiedenen Dicken der Bauelemente eine besondere Abstimmungsregel eingehalten wird. Nach dieser besitzen der Aufnahmebehälter mit dem Aufnahmebehälterboden eine Blechdicke von 0,7 bis 1 mm, die Platinenabdeckung eine Blechdicke von 0,7 mm oder weniger und die Platine, in der Ausführungsform aus einer Aluminiumlegierung, eine Dicke von 5 bis 9 mm.

Die Gar- und/oder Kochgeräte, von denen die Erfindung ausgeht, besitzen häufig und bevorzugt eine zu einer ebenen Aufstellfläche für das Gar- und/oder Kochgerät hin, z. B. zu einer Kochplatte hin, schwach konkave Bodenkaltgeometrie des Abdeckbodens. Diese bewirkt, daß das Gar- und/oder Kochgerät im kalten Zustand lediglich mit dem Rand des Abdeckbodens auf einer zugeordneten, ebenen Aufstellplatte, z. B. auf einer Kochplatte, aufsteht. Weist der Abdeckboden eine Bodenkaltgeometrie auf, die zu einer ebenen Aufstellfläche für das Gar- und/oder Kochgerät hin schwach konkav ist, so lehrt die Erfindung, daß die Blechdicke des Aufnahmebehälterbodens, die Blechdicke des Abdeckbodens, die Dicke der Platine, die Gestaltung der Abdeckbodenausnehmungen und der Abdeckbodenfüllstücke bombagestabil eingerichtet sind. Bombagestabil bedeutet, daß sich eine zur Aufstellfläche hin leicht konvexe Verformung des Abdeckbodens bei bodenseitiger Zuführung von Wärmeenergie nicht einstellt und zwar auch bei Zuführung der Wärmeenergie durch Wärmeleitung nicht. - Eine Bombage würde bewirken, daß das Gar- und/oder Kochgerät auf einer ebenen Aufstellplatte, z. B. auf einer Kochplatte, nur noch mittig aufsteht, was zum Tanzen des Gar- und/oder Kochgerätes führen kann und darüber hinaus den Wärmeübergang durch Wärmeleitung beeinträchtigt.

Im Rahmen der Erfindung kann die Verbindung der Platine mit dem Aufnahmebehälterboden und der Platinenabdeckung auf verschiedene Weise erfolgen. Insbesondere können die Platinenabdeckung mit ihrem Abdeckboden und bei Ausführungsform mit Kapselabdeckung mit ihrem Kapselkragen, sowie die Abdeckfüllstücke mit einer intermetallischen Verbindung mit der Platine und diese mit dem Aufnahmebehälterboden verbunden sein. Es besteht aber auch die Möglichkeit, die Anordnung so zu treffen, daß die Platinenabdeckung mit ihrem Abdeckboden, bei Ausführungsform als Kapselabdeckung mit ihrem Abdeckboden und dem Kapselkragen, sowie die Abdeckfüllstücke mit einer Lötverbindung mit der Platine und diese mit dem Aufnahmebehälterboden verbunden sind.

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch ein erfindungsgemäßes Gar- und/oder Kochgerät,
- Fig. 2: eine Draufsicht auf den Abdeckboden des Gegenstandes der Fig. 1 von unten,
- Fig. 3: entsprechend der Fig. 2 eine andere Ausführungsform eines erfindungsgemäßen Gar- und/oder Kochgerätes und
- Fig. 4: entsprechend der Fig. 3 eine weitere Ausführungsform eines erfindungsgemäßen Gar- und/oder Kochgerätes.

Das in den Figuren dargestellte topfförmige Gar- und/oder Kochgerät 1 ist für eine bodenseitige Zuführung von Wärmeenergie durch Wärmeleitung oder durch elektromagnetische Induktion eingerichtet. Es besitzt einen im Grundriß runden Aufnahmebehälter 2 für das Gar- und/oder Kochgut mit Behältermantel 3 und Behälterboden 4 aus austenitischem Stahlblech, eine bodenseitig angeschlossene Platine 5 aus einem gut leitenden metallischen Werkstoff, z. B. aus einer Aluminium- oder Kupferlegierung, und eine metallische Platinenabdeckung 6.

Die Platinenabdeckung 6 besitzt einen kreisscheibenförmigen Abdeckboden 7 mit einer Mehrzahl von über den Umfang und/oder den Radius verteilten Abdeckbodenausnehmungen 8. In die Abdeckbodenausnehmungen 8 sind Abdeckbodenfüllstücke 9 eingepaßt. Die Anordnung mag so getroffen sein, daß der Abdeckboden 7 aus austenitischem Stahlblech und Abdeckbodenfüllstücken 9 aus ferromagnetischem Stahlblech besteht, wobei der Abdeckboden 7 und die Abdeckbodenfüllstücke 9 metallisch mit der Platine 5 und diese mit dem Behälterboden 4 metallisch verbunden sind. Es kann aber auch die Anordnung so getroffen sein, daß der Abdeckboden 7 aus ferromagnetischem Stahl besteht und die Abdeckbodenfüllstücke 9 aus austenitischem Stahlblech bestehen. Auch hier sind der Abdeckboden 7 und die Abdeckbodenfüllstücke 9 metallisch mit der Platine 5 und diese mit dem Behälterboden 4 metallisch verbunden sind.

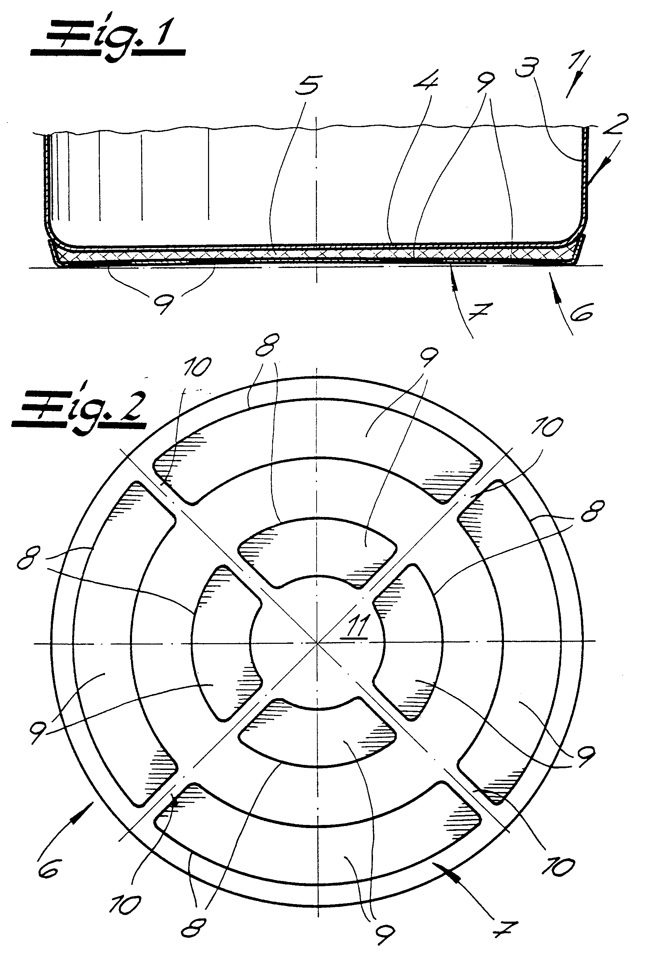

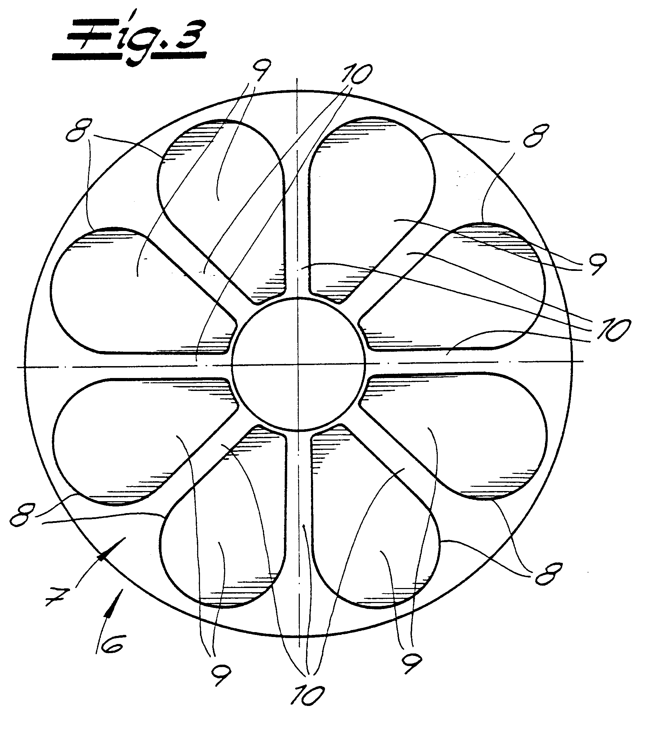

Im Rahmen der Erfindung können die Abdeckbodenfüllstücke 9 grundsätzlich eine sehr unterschiedliche Gestaltung aufweisen, z. B. einen kreisförmigen oder dreieckigen Grundriß aufweisen. Jedenfalls empfiehlt es sich, die Abdeckbodenausnehmungen 8 und die Abdeckbodenfüllstücke 9 kreissymmetrisch und/oder radialsymmetrisch auszubilden. In diesem Zusammenhang ist von besonderer Bedeutung, die Ausführungsform nach den Fig. 1 und 2. Man erkennt, daß die Abdeckbodenausnehmungen 8 als Kreisbogenabschnitte einer Breite von über 10 mm ausgeführt sind, daß diese Kreisbogenabschnitte zwischen radial verlaufenden Abdeckbodenstegen 10 angeordnet sind und daß die Abdeckbodenfüllstücke 9 in die Kreisbogenabschnitte 8 eingepaßt sind. Im Ausführungsbeispiel sind vier recktwinklig zueinander verlaufende Abdeckbodenstege 10 vorgesehen, die von einem kreisförmigen Abdeckbodenzentrum 11 ausgehen. - Es versteht sich, daß bei der beschriebenen Ausführungsform die Abdeckbodenausnehmungen 8 und die Abdeckbodenfüllstücke 9 auch geschlossen kreisförmig umlaufen können.

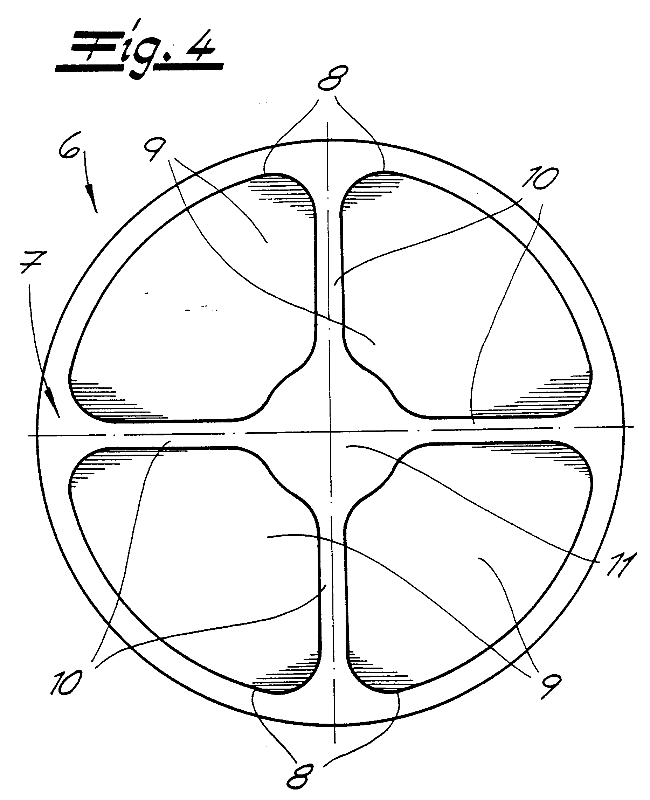

Bei der Ausführungsform nach Fig. 3 sind die Abdeckbodenausnehmungen 8 als Kreissegmente ausgeführt, zwischen denen radial verlaufende Abdeckbodenstege 10 angeordnet sind. Die ebenfalls kreissegmentförmigen Abdeckbodenfüllstücke 9 sind in die Kreissegmente 8 eingepaßt. Dabei sind die Kreissegmente zum Rand der Platinenabdeckung 6 hin halbkreisförmig begrenzt. Die Kreissegmente 8 sind gleich groß.

Es versteht sich, daß die Platinenabdeckung 6, wie bereits erwähnt, als Kapselabdeckung ausgebildet sein kann. Die Blechdicken entsprechen dem Patentanspruch 10. Die Verbindung zwischen dem Behälterboden 4, der Platine 5 und der Platinenabdeckung 6 kann als eine intermetallische Verbindung ausgeführt und durch eine Preßschweißung hergestellt sein. Insoweit empfiehlt sich die Ausführungsform nach DE 41 25 115 C2. Es besteht aber auch die Möglichkeit, die beschriebenen Bauteile mit Hilfe einer Lötverbindung miteinander zu vereinigen. Die beschriebene Bombagestabilität läßt sich stets einrichten.

## Patentansprüche

1. Topfförmiges Gar- und/oder Kochgerät (1), welches für eine bodenseitige Zuführung von Wärmeenergie durch Wärmeleitung oder elektromagnetische Induktion eingerichtet ist, - mit einem im Grundriß runden Aufnahmebehälter (2) für das Gar- oder Kochgerät mit Behältermantel (3) und Behälterboden (4) aus austenitischem Stahlblech, einer bodenseitig angeschlossenen Platine (5) aus einem gut wärmeleitenden metallischen Werkstoff und einer metallischen Platinenabdeckung (6), wobei
die Platinenabdeckung (6) einen kreisscheibenförmigen Abdeckboden (7) mit einer Mehrzahl von über den Umfang verteilten kreissymmetrischen Abdeckbodenausnehmungen besitzt, dadurch gekennzeichnet, daß
in die Abdeckbodenausnehmungen (8) Abdeckbodenfüllstücke (9) eingepaßt sind, wobei der Abdeckboden (7) aus austenitischem Stahlblech und die Abdeckbodenfüllstücke (9) aus ferromagnetischem Stahlblech bestehen,
wobei der Abdeckboden (7) und die Abdeckbodenfüllstücke (9) metallisch mit der Platine (5) und diese mit dem Behälterboden (4) verbunden sind und wobei der Abdeckboden (7) eine Bodenkaltgeometrie aufweist, die zu einer ebenen Aufstellfläche für das Gar- und/oder Kochgerät hin schwach konkav ist sowie die Blechdicke des Aufnahmebehälterbodens (4), die Blechdicke des Abdeckbodens (7), die Dicke der Platine (5), die Gestaltung der Abdeckbodenausnehmungen (8) und der Abdeckbodenfüllstück (9) bombagestabil eingerichtet sind.

2. Topfförmiges Gar- und/oder Kochgerät (1), welches für eine bodenseitige Zuführung von Wärmeenergie durch Wärmeleitung oder elektromagnetische Induktion eingerichtet ist, - mit einem im Grundriß runden Aufnahmebehälter (2) für das Gar- oder Kochgerät mit Behältermantel (3) und Behälterboden (4) aus austenitischem Stahlblech, einer bodenseitig angeschlossenen Platine (5) aus einem gut wärmeleitenden metallischen Werkstoff und einer metallischen Platinenabdeckung (6), wobei
die Platinenabdeckung (6) einen kreisscheibenförmigen Abdeckboden (7) mit einer Mehrzahl von über den Umfang verteilten kreissymmetrischen Abdeckbodenausnehmungen besitzt, dadurch gekennzeichnet, daß
in die Abdeckbodenausnehmungen (8) Abdeckbodenfüllstücke (9) eingepaßt sind, wobei der Abdeckboden (7) aus ferromagnetischem Stahlblech und die Abdeckbodenfüllstücke (9) aus austenitischem Stahlblech bestehen,
wobei der Abdeckboden (7) und die Abdeckbodenfüllstücke (9) metallisch mit der Platine (5) und diese mit dem Behälterboden (4) verbunden sind und wobei der Abdeckboden (7) eine Bodenkaltgeometrie aufweist, die zu einer ebenen Aufstellfläche für das Gar- und/oder Kochgerät hin schwach konkav ist sowie die Blechdicke des Aufnahmebehälterbodens (4), die Blechdicke des Abdeckbodens (7), die Dicke der Platine (5), die Gestaltung der Abdeckbodenausnehmungen (8) und der Abdeckbodenfüllstücke (9) bombagestabil eingerichtet sind.

3. Gar- und/oder Kochgerät nach einem der Ansprüche 1 oder 2, wobei die Abdeckbodenausnehmungen (8) und die Abdeckbodenfüllstücke (9) kreissymmetrisch und/oder radialsymmetrisch angeordnet sind.

4. Gar- und/oder Kochgerät nach einem der Ansprüche 1 bis 3, wobei die Abdeckbodenausnehmungen (8) als Kreisbogenabschnitte einer Breite von 10 bis 20 mm ausgeführt sind, zwischen radial verlaufenden Abdeckbodenstegen (10) angeordnet sind und wobei die ebenfalls kreisbogenförmigen Abdeckbodenfüllstücke (9) in die Kreisbogenabschnitte eingepaßt sind.

5. Gar- und/oder Kochgerät nach Anspruch 4, wobei vier rechtwinklig zueinander verlaufende Abdeckbodenstege (10) vorgesehen sind, die von einem kreisförmigen Abdeckbodenzentrum (11) ausgehen.

6. Gar- und/oder Kochgerät nach einem der Ansprüche 1 bis 3, wobei die Abdeckbodenausnehmungen (8) als Kreissegmente ausgeführt sind, zwischen denen radial verlaufende Abdeckbodenstege (10) angeordnet sind, und wobei die ebenfalls kreissegmentförmigen Abdeckbodenfüllstücke (9) in die Kreissegmente eingepaßt sind.

7. Gar- und/oder Kochgerät nach Anspruch 6, wobei die Kreissegmente zum Rand der Platineabdeckung (6) hin halbkreisbogenförmig begrenzt sind.

8. Gar- und/oder Kochgerät nach einem der Ansprüche 6 oder 7, wobei die Kreissegmente gleich groß sind.

9. Gar- und/oder Kochgerät nach einem der Ansprüche 1 bis 8, wobei die Platinenabdeckung (6) als Kapselabdeckung ausgeführt ist.

10. Gar- und/oder Kochgerät nach einem der Ansprüche 1 bis 8, wobei der Aufnahmebehälter (2) mit dem Aufnahmebehälterboden (4) eine Blechdicke von 0,7 bis 1 mm und die Platinenabdeckung (6) eine Blechdicke von etwa 0,7 mm oder weniger und die Platine (5) eine Dicke von 5 bis 9 mm aufweisen.

11. Gar- und/oder Kochgerät nach einem der Ansprüche 1 bis 10, wobei die Platinenabdeckung (6) mit ihrem Abdeckboden (7) und, bei Ausführungsform als Kapselabdeckung mit ihrem Abdeckboden und dem Kapselkragen, sowie die Abdeckfüllstücke mit einer intermetallischen Verbindung mit der Platine (5) und dem Aufnahmebehälterboden (4) verbunden sind.

12. Gar- und/oder Kochgerät nach einem der Ansprüche 1 bis 10, wobei die Platinenabdeckung (6) mit ihrem Abdeckboden (7) und, bei Ausführungsform als Kapselabdeckung mit ihrem Abdeckboden und dem Kapselkragen, sowie die Abdeckfüllstücke mit einer Lötverbindung mit der Platine (5) und dem Aufnahmebehälterboden (4) verbunden sind.

## Claims

1. A pot-shaped cooking and/or boiling utensil (1) which is designed for the supply of thermal energy at the base by thermal conduction or electromagnetic induction, - having a receiving vessel (2), which is round in horizontal projection, for the cooking or boiling utensil, comprising a vessel sidewall (3) and a vessel base (4) made of austenitic sheet steel, a bottom plate (5) which is attached at the base and which is made of a metallic material of good thermal conductivity, and a metallic bottom plate covering (6), wherein
the bottom plate covering (6) has a covering base (7) in the form of a circular disc, with a plurality of circularly symmetrical covering base recesses (8) distributed over its periphery, characterised in that
covering base filling pieces (9) are fitted into the covering bases recesses (8), wherein the covering base (7) consists of austenitic sheet steel and the covering base filling pieces (9) consist of ferromagnetic sheet steel,
wherein the covering base (7) and the covering base filling pieces (9) are metallically bonded to the bottom plate (5) and the latter is metallically bonded to the vessel base (4), and wherein the covering base (7) has a cold base geometry which is slightly concave in relation to a flat placement surface for the cooking and/or boiling utensil, and wherein the sheet metal thickness of the receiving vessel base (4), the sheet metal thickness of the covering base (7), the thickness of the bottom plate (5), the form of the covering base recesses (8) and that of the covering base filling pieces (9) are designed for stability against swelling.

2. A pot-shaped cooking and/or boiling utensil (1), which is designed for the supply of thermal energy at the base by thermal conduction or electromagnetic induction, - having a receiving vessel (2), which is round in horizontal projection, for the cooking or boiling utensil, comprising a vessel sidewall (3) and a vessel base (4) made of austenitic sheet steel, a bottom plate (5) which is attached at the base and which is made of a metallic material of good thermal conductivity, and a metallic bottom plate covering (6), wherein
the bottom plate covering (6) has a covering base (7) in the form of a circular disc, with a plurality of circularly symmetrical covering base recesses (8) distributed over its periphery, characterised in that
covering base filling pieces (9) are fitted into the covering bases recesses (8), wherein the covering base (7) consists of ferromagnetic sheet steel and the covering base filling pieces (9) consist of austenitic sheet steel,
wherein the covering base (7) and the covering base filling pieces (9) are metallically bonded to the bottom plate (5) and the latter is metallically bonded to the vessel base (4), and wherein the covering base (7) has a cold base geometry which is slightly concave in relation to a flat placement surface for the cooking and/or boiling utensil, and wherein the sheet metal thickness of the receiving vessel base (4), the sheet metal thickness of the covering base (7), the thickness of the bottom plate (5), the form of the covering base recesses (8) and that of the covering base filling pieces (9) are designed for stability against swelling.

3. A pot-shaped cooking and/or boiling utensil according to either one of claims 1 or 2, wherein the covering base recesses (8) and the covering base filling pieces (9) are disposed with circular symmetry and/or with radial symmetry.

4. A cooking and/or boiling utensil according to any one of claims 1 to 3, wherein the covering base recesses (8) are constructed as circularly arcuate sections with a width of 10 to 20 mm and are disposed between radially extending covering base webs (10), and wherein the covering base filling pieces (9), which are likewise circularly arcuate, are fitted into the circularly arcuate sections.

5. A cooking and/or boiling utensil according to claim 4, wherein four covering base webs (10) are provided which run at right angles to each other and which lead off from a circular covering base centre (11).

6. A cooking and/or boiling utensil according to any one of claims 1 to 3, wherein the covering base recesses (8) are constructed as segments of circles between which radially extending covering base webs (10) are disposed, and wherein the covering base filling pieces (9), which are likewise in the form of segments of circles, are fitted into the segments of circles.

7. A cooking and/or boiling utensil according to claim 6, wherein the segments of circles are delimited in the shape of semicircular arcs towards the edge of the bottom plate covering (6).

8. A cooking and/or boiling utensil according to either one of claims 6 or 7, wherein the segments of circles are of equal size.

9. A cooking and/or boiling utensil according to any one of claims 1 to 8, wherein the bottom plate covering (6) is constructed as a capsule covering.

10. A cooking and/or boiling utensil according to any one of claims 1 to 8, wherein the receiving vessel (2) with the receiving vessel base (4) has a sheet metal thickness of 0.7 to 1 mm, and the bottom plate covering (6) has a sheet metal thickness of about 0.7 mm or less, and the bottom plate (5) has a thickness of 5 to 9 mm.

11. A cooking and/or boiling utensil according to any one of claims 1 to 10, wherein the bottom plate covering (6) is joined at its covering base (7), and, in its form of construction as a capsule covering, is joined at its covering base (7) and at its capsule collar, to the bottom plate and the receiving vessel base (4) by an intermetallic bond, as are the covering filling pieces.

12. A cooking and/or boiling utensil according to any one of claims 1 to 11, wherein the bottom plate covering (6) is joined at its covering base (7), and, in its form of construction as a capsule covering, is joined at its covering base (7) and at its capsule collar, to the bottom plate (5) and the receiving vessel base (4) by a soldered joint, as are the covering filling pieces.

## Revendications

1. Ustensile de rôtissage et/ou de cuisson (1) en forme de marmite agencé pour l'amenée par le fond de l'énergie calorifique par conduction de chaleur ou par induction électromagnétique - comprenant un récipient de réception (2) circulaire en projection horizontale pour l'ustensile de rôtissage ou de cuisson, avec un corps de récipient (3) et un fond de récipient (4) en tôle d'acier austénitique, une platine (5) rattachée du côté fond et constituée d'un matériaux métallique bon conducteur de chaleur, et un recouvrement de platine (6) métallique, le recouvrement de platine (6) comprenant un fond de recouvrement (7) en forme de disque circulaire avec une pluralité d'évidements de fond de recouvrement (8) à symétrie circulaire répartis sur la circonférence, caractérisé en ce que dans les évidements de fond de recouvrement (8) sont enchâssées des pièces de remplissage de fond de recouvrement (9), le fond de recouvrement (7) étant réalisé en tôle d'acier austénitique et les pièces de remplissage (9) du fond de recouvrement étant constituées de tôle d'acier ferromagnétique, le fond de recouvrement (7) et les pièces de remplissage (9) du fond de recouvrement étant liés métalliquement à la platine (5) laquelle est liée au fond (4) du récipient, et le fond de recouvrement (7) présentant en direction d'une surface de pose plane pour l'ustensile de rôtissage et/ou de cuisson une géométrie de fond à froid légèrement concave, et l'épaisseur de tôle du fond de récipient de réception (4), l'épaisseur de tôle du fond de recouvrement (7), l'épaisseur de la platine (5), la configuration des évidements (8) du fond de recouvrement et des pièces de remplissage (9) du fond de recouvrement étant agencées de manière à résister au bombage.

2. Ustensile de rôtissage et/ou de cuisson (1) en forme de marmite agencé pour une amenée par le fond de l'énergie calorifique par conduction de chaleur ou par induction électromagnétique - comprenant un récipient de réception (2) circulaire en projection horizontale pour l'ustensile de rôtissage ou de cuisson, avec un corps de récipient (3) et un fond de récipient (4) en tôle d'acier austénitique, une platine (5) rattachée du côté fond constituée d'un matériau métallique bon conducteur de chaleur, et un recouvrement de platine (6) métallique, le recouvrement de platine (6) comprenant un fond de recouvrement (7) en forme de disque circulaire avec une pluralité d'évidements de fond de recouvrement (8) à symétrie circulaire répartis sur la circonférence, caractérisé en ce que dans les évidements de fond de recouvrement (8) sont enchâssées des pièces de remplissage de fond de recouvrement (9), le fond de recouvrement (7) étant réalisé en tôle d'acier ferromagnétique et les pièces de remplissage (9) du fond de recouvrement étant constituées de tôle d'acier austénitique, le fond de recouvrement (7) et les pièces de remplissage (9) du fond de recouvrement étant liés métalliquement à la platine (5) laquelle est liée au fond (4) du récipient, et le fond de recouvrement (7) présentant en direction d'une surface de pose plane pour le récipient de rôtissage et/ou de cuisson, une géométrie de fond à froid légèrement concave, et l'épaisseur de tôle du fond de récipient de réception (4), l'épaisseur de tôle du fond de recouvrement (7), l'épaisseur de la platine (5), la configuration des évidements (8) du fond de recouvrement et des pièces de remplissage (9) du fond de recouvrement étant agencées de manière à résister au bombage.

3. Ustensile de rôtissage et/ou de cuisson selon la revendication 1 ou 2, dans lequel les évidements (8) du fond de recouvrement et les pièces de remplissage (9) du fond de recouvrement sont disposés à symétrie circulaire et/ou à symétrie radiale.

4. Ustensile de rôtissage et/ou de cuisson selon l'une des revendications 1 à 3, dans lequel les évidements (8) du fond de recouvrement sont réalisés sous la forme de segments d'arc de cercle d'une largeur de 10 à 20 mm entre lesquels sont disposées des nervures de fond de recouvrement (10) d'orientation radiale, et dans lequel les pièces de remplissage (9) du fond de recouvrement également conformées en arc de cercle sont enchâssées dans les segments d'arc de cercle.

5. Ustensile de rôtissage et/ou de cuisson selon la revendication 4, dans lequel sont prévues quatre nervures de fond de recouvrement (10) s'étendant orthogonalement les unes par rapport aux autres qui partent d'un centre circulaire (11) du fond de recouvrement.

6. Ustensile de rôtissage et/ou de cuisson selon l'une des revendications 1 à 3, dans lequel les évidements (8) du fond de recouvrement sont réalisés sous la forme de segments de cercle entre lesquels sont disposées des nervures de fond de recouvrement (10) d'orientation radiale, et dans lequel les pièces de remplissage (9) du fond de recouvrement également conformées en segments de cercle sont enchâssées dans les segments de cercle.

7. Ustensile de rôtissage et/ou de cuisson selon la revendication 6, dans lequel les segments de cercle présentent en direction du bord du recouvrement de platine (6) une délimitation en forme de demi-cercle.

8. Ustensile de rôtissage et/ou de cuisson selon la revendication 6 ou 7, dans lequel les segments de cercle ont la même grandeur.

9. Ustensile de rôtissage et/ou de cuisson selon l'une des revendications 1 à 8, dans lequel le recouvrement de platine (6) est conformé en recouvrement en forme de capsule.

10. Ustensile de rôtissage et/ou de cuisson selon l'une des revendications 1 à 8, dans lequel le récipient de réception (2) avec le fond de récipient de réception (4) présente une épaisseur de tôle de 0,7 à 1 mm, dans lequel l'épaisseur de tôle du recouvrement de platine (6) est d'environ 0,7 mm ou moins, et dans lequel la platine (5) présente une épaisseur de 5 à 9 mm.

11. Ustensile de rôtissage et/ou de cuisson selon l'une des revendications 1 à 10, dans lequel le recouvrement de platine (6) avec son fond de recouvrement (7) et, pour la variante de recouvrement en forme de capsule, avec son fond de recouvrement (7) et le collet de capsule, ainsi que les pièces de remplissage de recouvrement sont liés à la platine et au fond (4) du récipient de réception par une liaison intermétallique.

12. Ustensile de rôtissage et/ou de cuisson selon l'une des revendications 1 à 11, dans lequel le recouvrement de platine (6) avec son fond de recouvrement (7) et, pour la variante de recouvrement en forme de capsule, avec son fond de recouvrement (7) et le collet de capsule, ainsi que les pièces de remplissage de recouvrement sont liés à la platine (5) et au fond (4) du récipient de réception par une liaison par brasage.
